# EUROPÄISCHE PATENTSCHRIFT

(11) **EP 1 231 841 B1**
(45) Veröffentlichungstag und Bekanntmachung des Hinweises auf die Patenterteilung: **28.07.2004**
(21) Anmeldenummer: 00975972.1
(22) Anmeldetag: 01.11.2000
(51) Int. Cl.: A22C 11/02

(54) **ABFÜLLVORRICHTUNG MIT VERSCHLIESSEINRICHTUNG**
FILLING DEVICE WITH A CLOSING ARRANGEMENT
DISPOSITIF DE REMPLISSAGE COMPORTANT UNE UNITE DE FERMETURE

(30) Priorität: 09.11.1999 DE 19953695
(43) Veröffentlichungstag der Anmeldung: 21.08.2002
(73) Patentinhaber: Poly-clip System GmbH & Co. KG, 60489 Frankfurt am Main (DE)
(72) Erfinder: TÖPFER, Klaus, 64572 Büttelborn (DE)
(74) Vertreter: Andres, Mark
(86) Internationale Anmeldenummer: PCT/EP2000/010739
(87) Internationale Veröffentlichungsnummer: WO 2001/033969

(56) Entgegenhaltungen:
- EP-A- 0 399 195
- WO-A-90/03114
- DE-A- 3 214 018
- DE-B- 1 290 070
- US-A- 5 346 425

## Beschreibung

Die Erfindung betrifft eine Vorrichtung zum Abfüllen von fließfähigem bis pastösem Füllgut in schlauchförmiges Verpackungsmaterial, welches von einem Füllrohr gegen die Reibungskraft eines das Füllrohr umschließenden, in einem Gehäuse gehaltenen Bremsrings (Darmbremse) mit Hilfe des Abfülldrucks in dem stromab einseitig verschlossenen Verpackungsmaterial abgezogen wird, wobei in Füllgut-Strömungsrichtung auf das Füllrohr eine Verschließeinrichtung mit das Verpakkungsmaterial radial einschnürenden Elementen folgt.

Derartige Abfüllvorrichtungen sind beispielsweise zur Herstellung von Würsten vielfältig bekannt. Sie sind üblicherweise auf den kontinuierlichen Betrieb zur Herstellung einer Folge diskreter Verpackungen (Würste) eingerichtet, wobei die Verschließeinrichtung immer dann - intermittierend - in Tätigkeit tritt, wenn die Sollfüllung einer Verpackung erreicht ist und das Füllen der nächsten Verpackung beginnen soll (DE 26 01 595 B2, DE 24 20 202 C2).

Im Laufe der Entwicklung ist der Automatisierungsgrad und die Betriebsgeschwindigkeit solcher Abfüllanlagen so groß geworden, daß namentlich die Verschließeinrichtung mit ihren das Verpackungsmaterial zu einem Zopf raffenden Verdrängern (aber auch die gegebenenfalls vorgesehene Trenneinrichtung) eine ernsthafte Gefahr für das Bedienungspersonal darstellt, wenn es etwa versuchen sollte, eine Betriebsstörung bei laufender Maschine oder in deren Auslauf zu beheben. Ähnliches gilt, wenn im Laufe des regulären Betriebs die auf dem Füllrohr bereitgehaltene Vorratsmenge an Verpackungsmaterial aufgebraucht ist und nachgefüllt werden muß. Sicherheitsvorschriften sehen daher vor, daß umfangreiche Abdeckungen in Form von Gittern o. dgl. in Strömungsrichtung des Füllgutes sowohl vor als auch hinter der Verschließeinrichtung den Zugriff zu dieser beim Betrieb verhindern und nur im Stillstand der Maschine erlauben.

Im Stand der Technik muß daher, wenn das Füllrohr mit neuem Verpackungsmaterial bestückt werden soll (üblicherweise durch seitliches Verschwenken des Füllrohrs), nicht nur die füllrohrseitige Abdeckung geöffnet, sondern der gesamte Maschinenkopf mit der Verdränger- und Verschließmechanik sowie gegebenenfalls der Abtrenneinrichtung und der Darmbremse mit ihrem Gehäuse so weit seitlich verschoben werden, daß das Füllrohr von diesen Einrichtungen freikommt. Das bedingt eine aufwendige Maschinenkonstruktion und kostet erhebliche Betriebszeit.

Dem will die Erfindung abhelfen. Sie sieht vor, daß das Bremsring-Gehäuse mit einem koaxial angeordneten Sicherheitsring verbunden und mit diesem in Achsrichtung des Füllrohrs verschiebbar ist, derart, daß der Sicherheitsring sich in den Wirkebenen der Elemente der Verschließeinrichtung befindet, wenn der Bremsring das Füllrohr verlassen hat. Auf diese Weise bedarf es, um das Füllrohr zwecks Neubeschickung mit Verpackungsmaterial freizubekommen, nur noch einer Axialverschiebung des Bremsring-Gehäuses mit dem Sicherheitsring. Dieser blockiert, wenn der Bremsring seine Wirkstellung auf dem Füllrohr verläßt, die koaxial zu diesem angeordneten, im Betrieb sich radial einwärts bewegenden Verdränger- und Klammersetz- sowie gegebenenfalls Trennelemente. Verletzungen aufgrund ungewollter Betätigung dieser Elemente sind daher ausgeschlossen. Kehrt die Kombination aus dem Bremsring, dessen Gehäuse und dem Sicherheitsring (nach Abschluß der Füllrohr-Beschickung mit Verpackungsmaterial) aus jener Arbeitsstellung des Sicherheitsrings in dessen Ruhestellung - die der Wirkstellung des Bremsringes entspricht - zurück, so ist einerseits die Betriebsfähigkeit der Verdränger- und Verschließmechanik wiederhergestellt, andererseits verhindert der sich jetzt füllrohrseitig vor jener Mechanik befindliche Sicherheitsring das versehentliche Eingreifen in diese, so daß es füllrohrseitig keiner weiteren Abdeckung mehr bedarf.

Vorzugsweise ist die Anordnung derart getroffen, daß der Sicherheitsring an seinem dem Füllrohr zugewandten Ende durch einen kreisringförmigen Boden verschlossen ist. Durch diese Ausbildung als "Sicherheitsglocke" wird einerseits die Stabilität der Konstruktion vergrößert, andererseits ihre Sicherheitsfunktion erhöht. Ferner kann an diesem Boden das Bremsringgehäuse in einer daran befestigten Halterung auswechselbar angeordnet werden.

Vorteilhaft ist der Sicherheitsring (mit dem Bremsring-Gehäuse) auf einer parallel zum Füllrohr angeordneten Längsführung verschieblich geführt und in seine Endstellungen mit Hilfe eines fluidisch betätigten Zylinders bewegbar. Dabei kann ferner ein Sicherheitsschalter vorgesehen sein, der bei Verlassen der Ruhestellung des Sicherheitsrings die Verschließeinrichtung abschaltet und bei Rückkehr des Sicherheitsrings in seine Ruhestellung einen einzelnen Verschließvorgang auslöst. Letzteres führt dazu, daß der erforderliche Stromab-Verschluß des Verpackungsmaterials vor dem neuerlich ersten Abfüllvorgang automatisch hergestellt wird. Alsdann kann das Auslösen der üblichen Abfüllautomatik - zweckmäßig mittels Zwei-Hand-Bedienung - erfolgen.

Die Zeichnung veranschaulicht die Erfindung an einem Ausführungsbeispiel. Darin zeigt:
- Fig. 1: eine Draufsicht auf das Mündungsende des Füllrohrs der erfindungsgemäßen Abfüllvorrichtung mit einer Verschließeinrichtung und einem Teil der Transporteinrichtung für die gefüllten Verpackungen;
- Fig. 2: eine der Fig. 1 entsprechende Draufsicht, jedoch bei vom Füllrohr abgezogenem Bremsring und zwecks Beschickung mit Verpackungsmaterial freigelegtem Füllrohr; und
- Fig. 3: eine ausschnittsweise Seitenansicht zu der Darstellung in Fig. 1.

Auf dem Füllrohr 1 einer im übrigen nicht dargestellten Füllmechanik einer insoweit herkömmlichen Abfüllvorrichtung befindet sich nahe dem Mündungsende 2 des Füllrohres 1 ein Bremsring 3, welcher in einem Gehäuse 4 gehalten ist. Zwischen dem Bremsring 3 und dem Füllrohr 1 läuft das auf letzterem in Form eines ziehharmonikaartig gefalteten Vorrats gehaltene Verpackungsmaterial zur Mündung 2 des Füllrohres 1 hin ab und wird beim Füllvorgang durch die anschließenden Komponenten der Abfüllvorrichtung geführt. Das Gehäuse 4 mit dem Bremsring 3 bildet mit dem Boden 6 und dem Sicherheitsring 7 eine "Sicherheitsglocke", welche koaxial und konzentrisch zur Achse des Füllrohrs 1 angeordnet ist.

Gemeinsam mit dem Gehäuse 4 des Bremsringes 3, die mittels eines Brückenarmes 8 mit einem Schlitten 9 verbunden sind, ist der Sicherheitsring 7 nebst Boden 6 über einen weiteren Schlitten 12, der gemeinsam mit dem Schlitten 9 auf einer Längsführung 10 parallel zum Füllrohr 1 verschieblich geführt ist, mit der Kolbenstange 13 eines Pneumatikzylinders 14 verbunden, so daß dessen Betätigung das Bremsringgehäuse 4 mit dem Bremsring 3 und den Sicherheitsring 7 mit Boden 6 in Längsrichtung des Füllrohres 1 verschiebt. Das Bremsringgehäuse 4 ist mit dem Bremsring 3 zum Wechsel des Bremsrings 3 gegen die Feder 1 1 separat verschieblich; außerdem erlaubt eine Stellring-Ausbildung der Hülse 5 die Verstellbarkeit der axialen Position des Bremsringgehäuses 4 in der Arbeitsstellung.

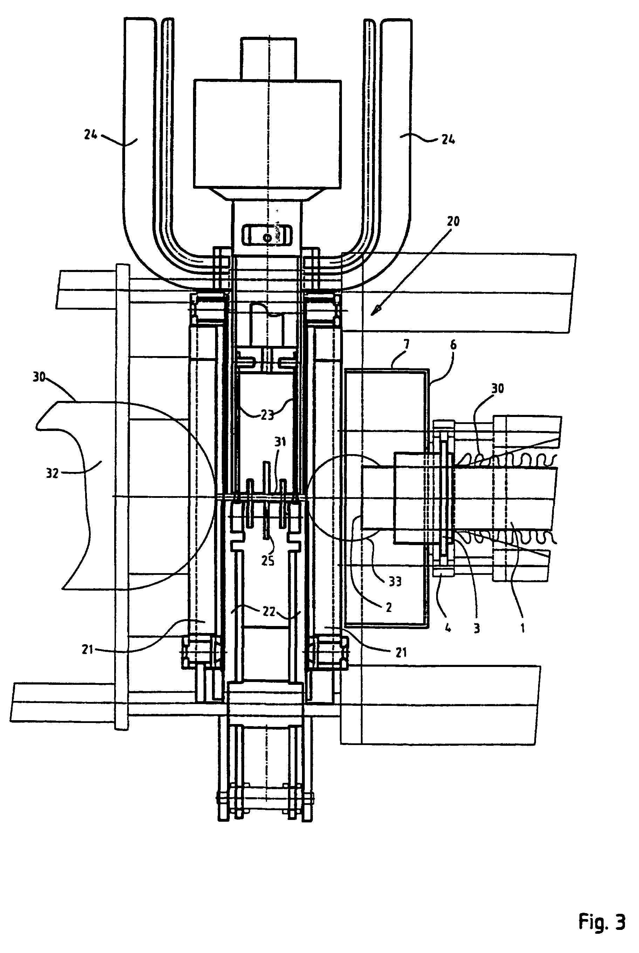

Stromab vor der Mündung 2 des Füllrohres 1 ist eine im Ganzen mit 20 bezeichnete Verschließeinrichtung vorgesehen, welche einerseits die beiden Verdränger 21 eines Spreizverdrängers und andererseits zwei zwischen die gespreizten Verdränger an den von diesen gebildeten Zopf 31 aus Verpackungsmaterial 30 bewegbaren Verschlußklammer-Setzeinrichtungen mit den Matrizen 22, den Stempeln 23 und den Magazinen 24 besteht; ferner ist zwischen diesen noch eine Trenneinrichtung 25 vorgesehen (Fig. 3).

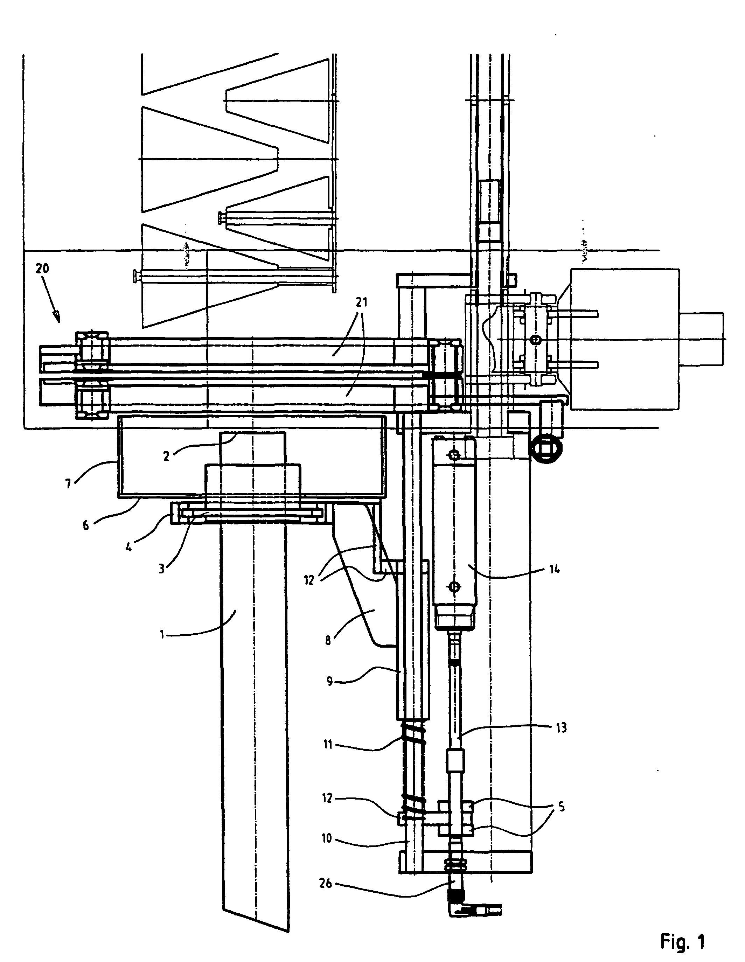

In der Darstellung der Fig. 1 befindet sich die Abfüllvorrichtung in ihrem Betriebszustand während eines Füllvorganges (jedoch ohne Darstellung von Verpackungsmaterial und Füllgut). In dieser Betriebsstellung befindet sich der Sicherheitsring 7 außerhalb des Raumes, welchen die Verschließeinrichtung 20 - auch im gespreizten Zustand der Verdränger 21 - umschreibt. Fig. 3 veranschaulicht diesen grespreizten Zustand zwischen dem Ende einer fertig abgefüllten, abgebrochen dargestellten Packung 32 und dem Anfang einer demnächst zu füllenden Packung 33. Fig. 1 und Fig. 3 machen deutlich, daß in dieser, der Wirkstellung des Bremsrings 3 entsprechenden Ruhestellung des Sicherheitsrings 7 dieser das Eingreifen in den der Mündung 2 des Füllrohres 1 benachbarten Verdränger 21 (unten in Fig. 1, rechts in Fig. 3) vom Sicherheitsring 7 verhindert.

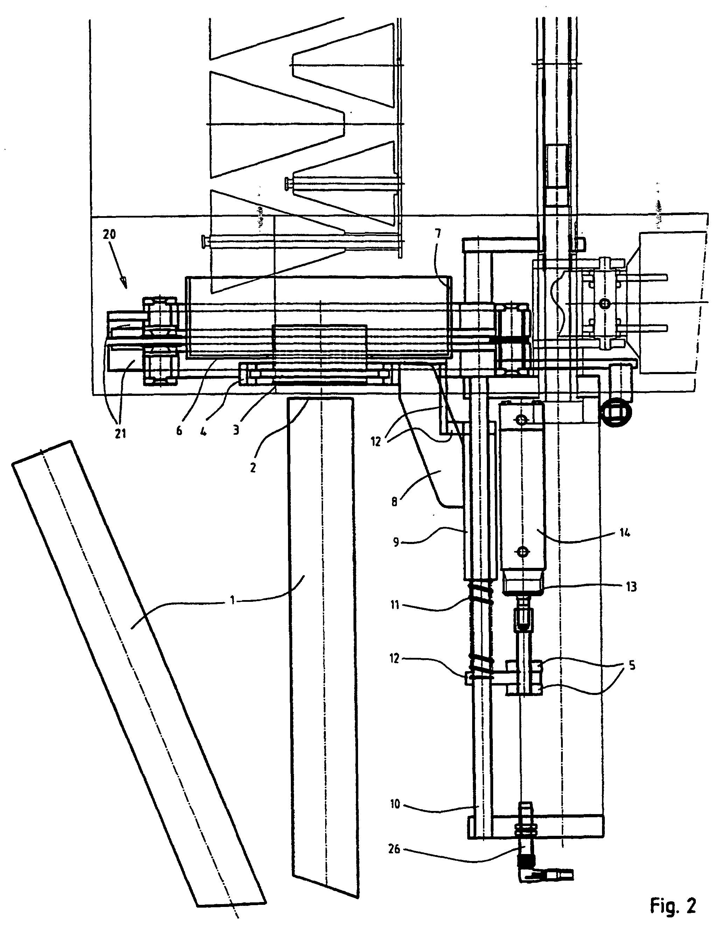

Wenn der auf dem Füllrohr 1 gespeicherte Vorrat an Verpackungsmaterial 30 aufgebraucht ist und durch einen neuen Vorrat ersetzt werden soll, werden durch Zurückziehen der Kolbenstange 13 in den Zylinder 14 die Schlitten 9 und 12 in die in Fig. 2 dargestellte Lage verschoben. Über den Arm 8 wird dabei der Bremsring 3 mit seinem Gehäuse 4 vom Füllrohr 1 abgezogen. Der davon mitgenommene Sicherheitsring 7 befindet sich alsdann zwischen den radial einwärts beweglichen Elementen der Verschließeinrichtung 20, und zwar - wie Fig. 2 erkennen läßt - auch dann noch, wenn der in Fig. 2 obere Verdränger 21 (links in Fig. 3) sich in der in Fig. 3 dargestellte Spreizstellung befinden sollte. Im Falle eines ungewollten Schließimpulses für irgendeines der radial einwärts beweglichen Elemente (Verdränger 21, Matrizen 22, Stempel 23, Trenneinrichtung 25) würden diese auf den Sicherheitsring 7 treffen und verhindern, daß etwa ein im Innern der Verschließeinrichtung 20 befindlicher Finger des Bedienungspersonals verletzt wird.

In diesem in Fig. 2 dargestellten Betriebszustand läßt sich, wie ebenfalls in Fig. 2 angedeutet, das Füllrohr 1 zwecks Beschickung mit neuem Verpackungsmaterial zur Seite schwenken. Alternativ kommt bei Zwillings- oder Mehrlings-Füllköpfen auch ein revolverartiges Einführen eines anderen Füllrohres 1 in die Betriebsstellung in Frage.

Sobald ein mit Verpackungsmaterial 30 beschicktes Füllrohr 1 zum weiteren Abfüllbetrieb zur Verfügung steht und seine Betriebsstellung eingenommen hat, wird durch Ausstoßen der Kolbenstange 13 aus dem Zylinder 14 der Bremsring 3 über das Füllrohr 1 bewegt und dabei der Sicherheitsring 7 aus dem von der Verschließeinrichtung 20 umschlossenen Raum zurückgezogen. Zugleich betätigt die Kolbenstange 13 einen Endschalter 26, welcher einen Arbeitszyklus der Verschließeinrichtung 20 auslöst.

## Patentansprüche

1. Vorrichtung zum Abfüllen von fließfähigem bis pastösem Füllgut in schlauchförmiges Verpackungsmaterial, welches von einem Füllrohr gegen die Reibungskraft eines das Füllrohr umschließenden, in einem Gehäuse gehaltenen Bremsrings mit Hilfe des Abfülldrucks in dem stromab einseitig verschlossenen Verpackungsmaterial abgezogen wird,
wobei in Füllgut-Strömungsrichtung auf das Füllrohr eine Verschließeinrichtung mit das Verpackungsmaterial radial einschnürenden Elementen folgt,
**dadurch gekennzeichnet, dass** das Bremsring-Gehäuse (4) mit einem koaxial angeordneten Sicherheitsring (7) verbunden und mit diesem in Achsrichtung des Füllrohres (1) verschiebbar ist, derart, dass der Sicherheitsring (7) sich in den Wirkebenen der Elemente der Verschließeinrichtung (20) befindet, wenn der Bremsring (3) das Füllrohr (1) verlassen hat.

2. Vorrichtung nach Anspruch 1,
**dadurch gekennzeichnet, dass** der Sicherheitsring (7) an seinem dem Füllrohr (1) zugewandten Ende durch einen kreisringförmigen Boden (6) verschlossen ist.

3. Vorrichtung nach Anspruch 1 oder 2, **dadurch gekennzeichnet,**
**daß** zur Auswechslung des Bremsrings (3) das Bremsring-Gehäuse (4) gegen die Kraft einer Feder (11) separat verschieblich angeordnet ist.

4. Vorrichtung nach einem der vorhergehenden Ansprüche,
**dadurch gekennzeichnet, dass** der Sicherheitsring (7) auf einer parallel zum Füllrohr (1) angeordneten Längsführung (10) verschieblich geführt und in seine Endstellungen mit Hilfe eines fluidisch betätigten Zylinders (14) bewegbar ist.

5. Vorrichtung nach einem der vorhergehenden Ansprüche,
**gekennzeichnet durch** einen Sicherheitsschalter (26), der bei Verlassen der Ruhestellung des Sicherheitsringes (7) die Verschließeinrichtung (20) abschaltet und bei Rückkehr des Sicherheitsringes (7) in seine Ruhestellung einen einzelnen Verschließvorgang auslöst.

## Claims

1. Apparatus for filling flowable to pasty filling product into tubular packaging material, the product being removed from a filling pipe counter to the frictional force of a brake ring, which surrounds the filling pipe and is held in a housing, with the aid of the filling pressure in the packaging material, which is closed downstream on one side,
the filling pipe being followed in the filling-product direction of flow by a closing device having elements which radially constrict the packaging material,
**characterized in that** the brake-ring housing (4) is connected to a coaxially arranged safety ring (7) and can be displaced with the latter in the axial direction of the filling pipe (1) in such a manner that the safety ring (7) is situated in the active planes of the elements of the closing device (20) when the brake ring (3) has left the filling pipe (1).

2. Apparatus according to Claim 1, **characterized in that** the safety ring (7) is closed at its end facing the filling pipe (1) by a circular base (6).

3. Apparatus according to Claim 1 or 2, **characterized in that**, to exchange the brake ring (3), the brake-ring housing (4) is arranged in a manner such that it can be displaced separately counter to the force of a spring (11).

4. Apparatus according to one of the preceding claims, **characterized in that** the safety ring (7) is guided displaceably on a longitudinal guide (10) arranged parallel to the filling pipe (1) and can be moved into its end positions with the aid of a fluidically actuated cylinder (14).

5. Apparatus according to one of the preceding claims, **characterized by** a safety switch (26) which, when the safety ring (7) leaves the inoperative position, switches off the closing device (20) and, when the safety ring (7) returns into its inoperative position, triggers an individual closing process.

## Revendications

1. Dispositif pour embosser du produit de remplissage, dont la consistance va de susceptible de s'écouler à pâteuse, dans un matériau d'emballage tubulaire tiré d'un tube de remplissage contre la force de frottement d'une bague de freinage qui entoure le tube de remplissage et qui est maintenue dans un boîtier à l'aide de la pression d'embossage dans le matériau d'emballage fermé d'un côté en aval ;
une installation de fermeture comportant des éléments qui resserrent radialement le matériau d'emballage faisant alors suite au tube de remplissage en direction d'écoulement du produit de remplissage,
**caractérisé en ce que** le boîtier à bague de freinage (4) est relié à une bague de sûreté (7) disposée coaxialement et qu'il peut être déplacé avec cette dernière en direction de l'axe du tube de remplissage (1) de telle manière que la bague de sûreté (7) se trouve dans les plans actifs des éléments de l'installation de fermeture (20) lorsque la bague de freinage (3) a quitté le tube de remplissage (1).

2. Dispositif selon la revendication 1, **caractérisé en ce que**, sur son extrémité orientée vers le tube de remplissage (1), la bague de sûreté (7) est fermée par un fond (6) en anneau de cercle.

3. Dispositif selon la revendication 1 ou 2, **caractérisé en ce que** pour changer la bague de freinage (3) le boîtier à bague de freinage (4) est disposé de façon à se déplacer séparément à l'encontre de la force d'un ressort (11).

4. Dispositif selon l'une des revendications précédentes, **caractérisé en ce que** la bague de sûreté (7) est guidée de façon à se déplacer sur un guidage longitudinal (10) parallèle au tube de remplissage (1) et qu'elle est rendue mobile dans ses positions terminales à l'aide d'un vérin (14) actionné par fluide.

5. Dispositif selon l'une des revendications précédentes, **caractérisé par** un commutateur de sûreté (26), qui déconnecte l'installation de fermeture (20) lorsque la bague de sûreté (7) quitte sa position de repos et qui déclenche une opération particulière de fermeture quand la bague de sûreté (7) revient dans sa position de repos.
